# EUROPÄISCHE PATENTSCHRIFT

(11) **EP 2 125 669 B1**
(45) Veröffentlichungstag und Bekanntmachung des Hinweises auf die Patenterteilung: **12.02.2014**
(21) Anmeldenummer: 07856067.9
(22) Anmeldetag: 08.12.2007
(51) Int. Cl.: C04B 40/06

(54) **VERFAHREN ZUR SANIERUNG VON SCHADSTELLEN IN ROHRLEITUNGEN ODER KANÄLEN**
METHOD FOR REPAIRING DAMAGE TO PIPELINES OR DUCTS
PROCÉDÉ D'ASSAINISSEMENT DE ZONES ENDOMMAGÉES DANS DES CONDUITES OU DES CANALISATIONS

(30) Priorität: 22.12.2006 DE 102006062337
(43) Veröffentlichungstag der Anmeldung: 02.12.2009
(73) Patentinhaber: Beyert, Joachim, 4728 Hergenrath (BE); Schreiber, Jörg, 70563 Stuttgart (DE)
(72) Erfinder: Beyert, Joachim, 4728 Hergenrath (BE); Schreiber, Jörg, 70563 Stuttgart (DE)
(74) Vertreter: Naeven, Ralf
(86) Internationale Anmeldenummer: PCT/DE2007/002212
(87) Internationale Veröffentlichungsnummer: WO 2008/077369

(56) Entgegenhaltungen:
- EP-A- 0 475 309
- EP-A- 0 589 831
- DE-A1- 2 704 438
- DE-A1- 19 650 206
- DE-A1- 19 745 981
- DE-A1- 19 836 730
- US-A- 5 234 497

## Beschreibung

Die Erfindung betrifft ein Verfahren zur Sanierung von Schadstellen in Rohrleitungen oder Kanälen, bei dem mittels einer Sanierungsvorrichtung die Schadstelle temporär gegenüber der Umgebung zumindest weitgehend abgedichtet wird und ein Injektionsmittel auf mineralischer Basis, nämlich aufweisend eine Zement und Wasser enthaltende Zementkomponente (Z), in die Schadstelle eingebracht wird sowie ein entsprechendes Zwei-Komponenten-Injektionsmittel.

Ein Anwendungsbereich ist beispielsweise die Sanierung von Rohrleitungen oder Kanälen, insbesondere Abwasserkanälen. Diese sind meist aus einzelnen Rohrelementen aus Steinzeug oder Beton aufgebaut, wobei an den Fügestellen der einzelnen Elemente häufig eine gegenseitige Überlappung oder Verschränkung der Rohrelemente vorgesehen ist. Die Fügestelle kann auch mit einem Dichtungsmaterial abgedichtet sein. Im Laufe der im Allgemeinen viele Jahre dauernden Liegezeit der Rohre kann es besonders an diesen Fügestellen zu Undichtigkeiten kommen. Diese können beispielsweise durch Bodensetzungen, Erschütterungen oder ähnliches entstehen, durch die die Rohrelemente gegeneinander verschoben werden. Es kann auch das an der Fügestelle vorgesehene Dichtungsmaterial durch äußere Einwirkung oder Alterung seine Dichtwirkung verlieren. Ebenso kann das Rohrmaterial selbst durch chemische und/oder mechanische Einflüsse angegriffen werden, so dass sich an den Wandungen der Rohrelemente -Schadstellen ergeben, die ebenfalls zu Undichtigkeiten führen,

Derartige Undichtigkeiten stellen in zweierlei Hinsicht ein Problem dar: Zum einen kann dadurch Wasser aus dem umgebenden Erdreich in das Rohr gelangen, so dass durch die dadurch erhöhte Wassermenge beispielsweise die Kapazität einer nachgeschalteten Kläranlage überschritten wird. Weiterhin können durch die Undichtigkeiten auch im Kanal transportierte Stoffe austreten und so beispielsweise zu einer Belastung des Grundwassers führen. Somit ist es erforderlich, derartige Kanäle in regelmäßigen Abständen oder zumindest bei Verdacht von Leckagen zu inspizieren und Schadstellen abzudichten.

Aufgrund des inzwischen hohen Alters vieler Kanalisationen weltweit ist eine Unmenge von Schäden an derartigen Rohrleitungen zu beobachten, so dass sich ein immenser Sanierungsbedarf ergibt. Es ist in der Praxis häufig zu beobachten, dass in einem zu sanierenden Rohrabschnitt jede oder zumindest nahezu jede Fügestelle zwischen den Rohrelementen schadhaft ist, also alle ein bis zwei Meter oder sogar noch häufiger eine Schadstelle auftritt.

Falls die Leitung nicht freigelegt werden soll, was mit sehr hohem Aufwand und entsprechenden Kosten verbunden ist, ist die Sanierung nicht begehbarer Rohrleitungen jedoch nur mit maschineller Unterstützung möglich. Dabei wird meist ein von einem Servicefahrzeug aus ferngesteuerter und mit einer Kamera ausgestatteter Kanalroboter durch das Rohr bewegt, der weiterhin mit einem so genannten Injektionspacker gekoppelt ist. Wenn durch die Kamera des Kanalroboters eine Schadstelle entdeckt wird, wird der Packer beispielsweise durch einen Seilzug von einem Servicefahrzeug aus an die Stelle gezogen, dichtet diese mit aufblasbaren Elementen gegenüber der Umgebung ab und bringt sodann ein Injektionsmittel in die Schadstelle ein, das ebenfalls vom Servicefahrzeug aus zugeführt wird.

Ein derartiger Packer zur Rohrsanierung ist allgemein bekannt und beispielsweise in der gattungsbildenden DE 198 36 730 C 2 beschrieben. Diese betrifft eine Vorrichtung zur Sanierung von rohrförmigen Gegenständen mit einer entlang der Längsachse des rohrförmigen Gegenstandes längsbewegbaren Beschichtungseinrichtung zum Aufbringen eines Beschichtungsmittels auf die Innenseite und/oder in die zu verschließenden Öffnungen des rohrförmigen Gegenstandes. Dabei ist weiterhin vorgesehen, den zu bearbeitenden Abschnitt des Rohres durch zwei Absperrkissen gegenüber der Umgebung abzudichten und den so entstehenden Raum mit einem Befüllungsmedium zu befüllen, dessen Arbeitsdruck größer ist als der hydrostatische Umgebungsdruck an dem am tiefsten liegenden Ort des Rohres. Als Beschichtungsmittel ist hier vorzugsweise ein mineralisches Beschichtungsmittel, etwa Zement oder Beton vorgesehen.

Ein Nachteil an der hier vorgesehenen kontinuierlichen Bewegung der Sanierungsvorrichtung durch das Kanalrohr ist, dass dadurch der Materialauftrag pro Wandfläche naturgemäß begrenzt ist und somit lediglich kleinere Schadstellen repariert werden können. Bei größeren Schadstellen wie etwa undichten Fügestelle hingegen müsste die Sanierungsvorrichtung am Ort der Schadstelle anhalten, das Injektionsmittel einbringen und an Ort und Stelle verbleiben, bis dieses sich nicht selbstständig wieder ablöst. Das Injektionsmittel muss dabei zumindest so weit verfestigt sein, bis es - zumindest bei Anwendung an der oberen oder seitlichen Wandung - sein Eigengewicht tragen kann und/oder gegebenenfalls dem hydrostatischen Druck des umgebenden Grundwassers standhalten kann, bevor der Packer zur nächsten Schadstelle versetzt werden kann.

Die Zeitdauer, innerhalb der mineralische Injektionsmittel eine ausreichende Standfestigkeit nach der Beendigung des jeweiligen Verpressvorganges erreichen, liegt zwischen 30 und 120 Minuten. Während dieser Wartezeit steift sowohl das verpresste Injektionsmaterial in der Schadstelle als auch das in der Zuleitung befindliche Injektionsmaterial an, so dass nach jeder einzelnen Sanierung einer Schadstelle der Injektionspacker und die Zuleitung wieder geborgen werden müssen. Die bestehenden Verfahren werden daher nur zur Behebung einzelner Schäden innerhalb einer Haltung eingesetzt und sind gemessen an dem gesamten Sanierungsaufkommen bedeutungslos.

Die Sanierung einer Kanalhaltung, in der sich in kurzen Abständen Schadstellen finden, was wie erwähnt nicht selten auftritt, ist damit also aufgrund des immensen Zeitbedarfs praktisch kaum durchführbar und jedenfalls höchst unwirtschaftlich. Die Verwendung eines schnell bindenden Zements ist wiederum nicht möglich, da die Gefahr besteht, dass dieser aufgrund der oft langen Zuleitungswege und insbesondere bei Arbeitsunterbrechungen bereits in der Zuleitung abbindet und damit gegebenenfalls die Sanierungsvorrichtung unbrauchbar macht.

Daher werden Injektionen von Kanalrohrverbindungen nahezu ausschließlich mit Injektionsmitteln auf Kunstharzbasis durchgeführt. Diese bestehen meist aus zwei Komponenten, die getrennt der Injektionsstelle zugeführt und unmittelbar vor dem Einwirkungsort vermischt werden und somit erst dort beginnen zu erhärten. Ein derartiges Verfahren und entsprechende Materialien sind beispielsweise in der DE 42 32 059 A 1 und der DE 197 45 981 A 1 offenbart. Ebenfalls verwendet werden gelbildende Zwei-Komponenten-Materialien auf Wasserglas-Basis, wie beispielsweise in der DE 196 50 206 A 1 beschrieben. Aus der DE 198 55 570 A1 ist ein Verfahren zum Abdichten schadhafter Bauwerke bekannt, bei dem mehrere Komponenten der Dichtungsmasse auf Kunststoffbasis über mindestens zwei Zuleitungen einem unmittelbar vor einer Injektordüse angeordneten statischen Mischer zugeführt werden. Nachteilig an diesen Materialien auf Kunststoffbasis ist allerdings, dass diese erheblich teurer und weniger umweltverträglich sind als mineralische Injektionsmaterialien. Zudem bestehen Zweifel an der Dauerhaftigkeit insbesondere von Kunstharzverbindungen. Das in der DE 198 55 570 A1 beschriebene Verfahren ist weiterhin nur für zugängliche Schadstellen wirtschaftlich einsetzbar. Die Verwendung von Kunstharzen schließt einen mehrfachen Einsatz der Statikmischer aus, da das Reaktionsprodukt nicht mehr aus dem Mischer entfernt werden kann. Die Statikmischer müssen daher nach jeder Injektion händisch ausgetauscht werden. Bei einem Einsatz in nichtbegehbaren Kanälen müsste hierzu der Injektionspacker nach jeder Injektion aufwändig geborgen werden. Aus diesem Grund besitzen Injektionspacker für die Sanierung von nicht begehbaren Kanalrohrverbindungen keine Statikmischer, sondern die beiden Harzkomponenten werden durch zwei getrennte Auslassöffnungen in der Außenhülle des Packers in den Injektionsraum gepresst und vermischen sich erst im Muffenspalt. Diese Art der Vermischung ist nicht kontrollierbar, weshalb die Zusammensetzung der erhärteten Injektionskörper und die damit verbundenen Materialeigenschaften - beispielsweise die Dauerhaftigkeit - ungewiss bleiben.

Eine Verwendung von Zwei-Komponenten-Materialien auf mineralischer Basis ist aus der Spritzbetontechnik bekannt, wie beispielsweise in der DE 10 2004 016 127 B 3 offenbart. Gemäß dieser Schrift wird dem Zement ein aus zwei Komponenten bestehender Abbindebeschleuniger zugemischt, von dem die erste Komponente bereits der trockenen Zementmasse zugesetzt wird und die zweite Komponente beispielsweise erst beim Spritzvorgang an der Düse zugegeben wird. Die Vermischung des Beschleunigers mit der Zementmasse geschieht dann während der turbulenten Verwirbelung in der Luft beim Aufspritzen. Eine derartige Verwirbelung kann aber bei der Injektion in eine Schadstelle eines Kanalrohres aufgrund der dort gegebenen beengten räumlichen Verhältnisse nicht stattfinden. Zudem muss das Injektionsmittel mit einem gewissen Druck in einen räumlich eng begrenzten Hohlraum eingepresst werden. Somit sind die bekannten Spritzbetonverfahren für die Kanalsanierung nicht anwendbar.

Aus der DE 26 50 045 A1 ist ein Verfahren zum Ausfüllen bergbaulicher Hohlräume bekannt, bei dem ein hydraulisches Bindemittel oder ein hydraulisch abbindender Feinstmörtel in "dünnflüssiger wässriger Suspension" mit einem Wasser/Feststoff-Wert im Bereich von 0,6 - 0,7 durch Rohr- oder Schlauchleitungen über große Entfernungen von einer Pumpstation zu einem untertägigen Verwendungsort geführt und dort mittels eines statischen Mischers ein einen erstarrungsbeschleunigenden Bestandteil enthaltendes Aktivationsmittel beigemischt wird. Es ist offenbart, das 40 - 60 Gew.% Wasser enthaltende Aktivationsmittel der Bindemittel oder Feinstmörtel-Suspension in gleich bleibender Konzentration von 2-3 Gew.% der Trockenmasse des Bindemittels oder des Feinstmörtels zuzumischen. Eine dünnflüssige wässrige Suspension gemäß diesem Stand der Technik eignet sich weniger für die Sanierung von von Rohrleitungen und Kanälen.

Die hier beschriebene Zumischung des Aktivationsmittels als "wässrige Lösung" (DE 2650045A1 S. 17) in eine dünnflüssige wässrige Suspension (1. Patentanspruch) führt gezwungenermaßen zu einer wasserreichen Injektionsmischung, die nicht geeignet ist, nach ihrer Aushärtung einen dauerhaft wasserdichten Injektionskörper auszubilden. Dies ist auch nicht die Aufgabe dieses Standes der Technik, da die Injektionsmischung Hohlräume im Bergbau lediglich zu statischen Zwecken verfüllen soll. Die Einstellung des Injektions- und Aktivationsmittels auf eine dünnflüssige Konsistenz dient im vorliegenden Fall der Vereinfachung des Mischvorganges. Auch sehr ungleiche Volumenströme lassen sich dann mit einfacher Technik weitgehend homogen mischen.

Eine dünnflüssige Konsistenz ist aber zur Abdichtung offener Schadstellen ungeeignet, da es nach dem Ausbringen nicht schnell genug erstarrt, um selbstständig in der Schadstelle zu verbleiben. Des Weiteren ist es wegen eines geringen Feststoffanteils gegenüber einem chemischen Angriff nicht hinreichend widerstandsfähig. Insbesondere innerhalb von Kanalisationen ist das erhärtete Injektionsmaterial chemischen Angriffen aus der Kanalatmosphäre ausgesetzt (z.B. Biogene Schwefelsäurekorrosion). Nur eine dichte Feststoffmatrix gewährleistet dann die chemische und mechanische Widerstandsfestigkeit des erhärteten Injektionsmaterials. Die Verwendung "dünnflüssiger wässriger Suspensionen" zur Erzielung einer guten Vermischung kommt daher zur Sanierung von Kanälen nicht in Frage. Die zum Einstellen einer "dünnflüssigen" Konsistenz überschüssige Menge des Wassers, die später nicht chemisch gebunden wird, bildet im ausgehärteten Injektionsmaterial Porenräume, die das Eindringen von z.B. Schwefelsäure und das Lösen des erhärteten Materials begünstigt.

Aus dem Vorgenannten ergibt sich nun die Aufgabe, eine Möglichkeit vorzusehen, ein mineralisches Injektionsmittel für die Sanierung von Schadstellen in in Rohrleitungen und Kanälen, zu verwenden, wobei das Injektionsmittel auch über einen längeren Zeitraum verarbeitbar, insbesondere pumpbar bleibt und dennoch nach dem Einbringen in die Schadstelle schnell abbindet, so dass ein zügiger Arbeitsfortschritt erzielt werden kann.

Diese Aufgabe wird bei einem Verfahren der eingangs genannten Art dadurch gelöst, dass das Injektionsmittel aus der Zement und Wasser enthaltenden Zementkomponente und einer einen Zement-Erstarrungsbeschleuniger, mindestens einen mineralischen Feststoff und Wasser enthaltenden Beschleunigerkomponente besteht, die getrennt der Sanierungsvorrichtung zugeführt werden und vor dem Einbringen des Injektionsmittels in die Schadstelle vermischt werden, wobei das Volumenverhältnis von Zementkomponente zu Beschleunigerkomponente höchstens 3:1 und mindestens 2:3 beträgt und beide Injektionsmittelkomponenten mit einem Wasser/Feststoff-Wert von höchstens 0,5 pastös sind.

Dabei kann die Beschleunigerkomponente einen bekannten Erstarrungsbeschleuniger wie beispielsweise GECEDRAL^{®} der BK Giulini Chemie GmbH & Co. OHG enthalten. Da die Zementkomponente ohne Zugabe des Erstarrungsbeschleunigers nur sehr langsam und die Beschleunigerkomponente überhaupt nicht abbindet, bleibt eine Verarbeitbarkeit zumindest über eine bis mehrere Stunden hinweg gewährleistet. Es kann auch je nach Anforderung ein besonders langsam abbindender Zement eingesetzt werden. Nach dem Vermischen hingegen, das erst unmittelbar vor dem Einbringen in den Einwirkungsort stattfindet, erstarrt die Mischung sehr schnell, gegebenenfalls innerhalb weniger Minuten, so dass ein zügiger Arbeitsfortschritt gewährleistet ist. Somit ist es nun erstmals möglich, ein mineralisches Injektionsmittel zur Sanierung nicht begehbarer Rohrleitungen effizient einzusetzen. Gegenüber der Verwendung der üblichen in der Kanalrohrsanierung eingesetzten Kunstharzmischungen ergeben sich große Vorteile hinsichtlich der Kosten, der Dauerhaftigkeit der Sanierung und der Umweltverträglichkeit.

Die Menge an Erstarrungsbeschleuniger, die dem Zement zur Erzielung eines schnellen Abbindens zugesetzt werden muss, ist normalerweise sehr gering im Vergleich zur *Gesamtmenge des Injektionsmaterials und beträgt nur ca. 1,0 bis 1,5 Gew. %*. Bei einem sehr ungleichen Mengenverhältnis ist es allerdings schwierig, die erforderliche homogene Mischung zu erzielen. Die für die schnelle Erstarrung benötigte Menge des Erstarrungsbeschleunigers kann einem feststoffreichen, pastösen Material nicht wie im Stand der Technik üblich und in DE 2650045A1 beschrieben in flüssiger Form zugemischt werden, da, wie Versuche gezeigt haben, hierbei mit einfacher Mischtechnik keine homogene Mischung erzielt werden kann. Auch die Zuführung des Aktivationsmittels in Pulverform ist bei einem pastösen Injektionsmittel ohne außergewöhnlich umfangreiche Mischtechnik nicht durchführbar. Die im Verhältnis zur Injektionsmittelmenge geringe Zugabemenge (DE 2650045A1 Patentanspruch 10: 2 - 3 Gew. % der Trockenmasse Bindemittel entspricht ca. 0,6 - 1,0 Gew. % bezogen auf die Injektionsmittelmenge) lässt sich in eine pastöse Komponente nur mit großer Mischenergie (z.B. in einem dynamischen Zwangsmischer) und langer Mischdauer (üblich 1 - 2 min.), homogen einmischen. Für eine solche Mischtechnik steht aber im beengten Raum eines nicht begehbaren Kanalrohres (Innendurchmesser häufig nur 20 oder 30 cm) kein Platz zur Verfügung.

Durch die erfindungsgemäße Aufteilung der Mischung in eine Zementkomponente und eine zweite Komponente aus inerten, mineralischen Zuschlägen, latent hydraulischen Bindemitteln, Wasser und homogen eingemischter, geringer Beschleunigermenge können innerhalb der beanspruchten Bandbreite des Volumenverhältnisses der Zementkomponente zur Beschleunigerkomponente von zwischen 3:1 und 2:3 die Komponenten mit einem Statikmischer hinreichend homogen miteinander vermischt werden. Insbesondere ein Volumenverhältnis von 1:1 1 bietet die besten Voraussetzungen zur Erzielung einer homogenen Mischung mit minimalem technischen Aufwand. Das Volumenverhältnis von 1:1 ermöglicht die Verwendung von zwei baugleichen Verpresskolben gleichen Fördervolumens, die zwangsweise parallel gesteuert werden und die somit automatisch das geforderte Volumenverhältnis beider Komponenten ohne den Einsatz fehleranfälliger Dosierpumpen oder Regelventile sicherstellen.

Ein weiter besonderer Vorteil der Verfahrensweise mit zwei gleichvolumigen Komponenten besteht darin, dass die ursprünglich geringe Volumenmenge des Erstarrungsbeschleunigers bereits außerhalb des Kanalrohres mit leistungsstarken hochtourigen Chargenmischern in 50% des gesamten Injektionsmaterials (in der Beschleuniger-Komponente) fein verteilt wird. Auf diese Weise wird eine lokale Überdosierung des Beschleunigers vermieden, die beim Einmischen eines reinen Beschleunigers in eine Zementsuspension mittels Statikmischer auftreten kann und die zur Störung der Festigkeitsentwicklung führen wurde. Die Mischwirkung eines Statikmischers ist im Vergleich zu einem hochtourigen Chargenmischer deutlich geringer, so dass die feine Verteilung einer geringen Materialmenge in einer größeren Materialmenge besser durch leistungsstarke hochtourige Mischer erreicht werden kann. Der Statikmischer muss dann erfindungsgemäß lediglich zwei gleichvolumige Komponenten miteinander vermischen, die auf gleiche Fließeigenschaften und Feststoffgehalte eingestellt werden können.

Zur Einstellung des gewünschten Volumenverhältnisses bei gleichzeitiger Anpassung der Fleißeigenschaften an die der Zementkomponente dient der in der Beschleunigerkomponente vorhandene mineralische Feststoff. Der mineralische Feststoff erniedrigt den für die gewünschten Volumenverhältnisse notwendigen Wasseranteil. Hierdurch kann im fertig gemischten Injektionsmittel ein hinreichender Bindemittel- und Feststoffgehalt mit den gewünschten Eigenschaften des Endmaterials in Bezug auf Festigkeit, chemische Widerstandsfähigkeit, Wasserdurchlässigkeit und Vermeidung von Schwindrissen erreicht werden.

Mit dem erfindungsgemäßen Verfahren ist es möglich, das Volumen, die Viskosität, die Fließgrenze und den Feststoffgehalt der Beschleunigerkomponente den entsprechenden Eigenschaften der Zementkomponente optimal anzupassen, um auf diese Weise eine homogene Mischung zu ermöglichen.

Das erfindungsgemäße Verfahren kann so ausgeführt werden, dass die Beschleunigerkomponente als mindestens einen mineralischen Feststoff ein puzzolanisches und/oder latent-hydraulisches Material, beispielsweise Flugasche, insbesondere Steinkohlenflugasche enthält. Die Steinkohlenflugasche reagiert nicht mit dem Erstarrungsbeschleuniger, da sie nur bei einer Zufuhr von Kalziumoxid erhärten kann. Bei der Vermischung der Zement- und der Beschleunigerkomponente reagiert nun zunächst der Erstarrungsbeschleuniger mit dem Zement. Durch dessen Hydratation wird dann das für die Steinkohlenflugasche erforderliche Kalziumhydroxid freigesetzt, so dass diese schließlich zu der Festigkeitsentwicklung des Materials beiträgt.

Die Beschleunigerkomponente kann erfindungsgemäß des Weiteren Bentonit enthalten. Der Erstarrungsbeschleuniger, beispielsweise der vorher genannte, geht auch mit dem Bentonit keine die Konsistenz verändernde Reaktion ein, so dass die Beschleunigerkomponente solange verarbeitbar bleibt, bis sie mit der Zementkomponente vermischt wird.

Erfindungsgemäß kann die Zementkomponente neben Zement und Wasser auch Bentonit enthalten. Bentonit wirkt dabei als Verdickungsmittel, das verhindert, dass der Zement im Wasser sedimentiert und stellt somit die Homogenität der Zementkomponente sicher, die für die Qualität der herzustellenden Abdichtung wesentlich ist. Infolge der thixotropen Eigenschaften des Bentonits kann gleichzeitig die Fließfähigkeit der Zementkomponente den Sanierungsrandbedingungen angepasst werden. Durch den Einsatz von Bentonit wird weiterhin eine Schmierwirkung an der Schlauchinnenwand der Materialzuleitungen erzeugt. Dadurch kann trotz der pastösen Konsistenz beider Komponenten die für die Kanalsanierung erforderliche große Förderstrecke von der Pumpe zur Schadstelle erzielt werden.

Zur Verringerung des Wassergehalts kann der Zementkomponente auch ein latenthydraulisches oder puzzolanisches Material beigegeben werden. Hier eignet sich ebenfalls Flugasche, insbesondere Steinkohlenflugasche. Sofern dies aufgrund der Verringerung des Wassergehalts notwendig ist, kann die Zementkomponente zur Erhöhung der Fließfähigkeit ein Fließmittel enthalten.

Weiterhin können auch der Zementkomponente und/oder der Beschleunigerkomponente inerte Zusatzstoffe, wie etwa Gesteinsmehl, zugegeben werden. Diese Zusatzstoffe reagieren nicht mit den anderen Inhaltsstoffen, tragen also nicht zum Abbinde- oder Erhärtungsprozess bei, sondern erhöhen die Dichte und damit die Festigkeit des Endmaterials.

Insgesamt ergibt sich nun die Möglichkeit, die Beschleunigerkomponente und Zementkomponente bei geringstmöglichem Wasserbedarf und somit hohem Feststoffanteil auf gleiche Volumenverhältnisse und/oder vergleichbare Fließeigenschaften einzustellen, so dass eine optimale Mischbarkeit erzielt wird. Weiterhin vorteilhaft ist, dass das Injektionsmaterial aufgrund seiner Zusammensetzung und seiner pastösen Konsistenz auch unter Wasser eine geschlossene Injektionsfront ausbildet und sich nicht im Grundwasser entmischt. Dadurch ist auch die Sanierung einer unter dem Grundwasserspiegel liegenden Rohrleitung mit dem erfindungsgemäßen Verfahren unter Einhaltung gleich bleibender Materialeigenschaften des erhärteten Dichtkörpers möglich.

Zur Mischung der Zementkomponente und der Beschleunigerkomponente kann erfindungsgemäß ein Statikmischer verwendet werden. Dessen dem Fachmann wohl bekannte Wirkungsweise beruht darauf, dass der Materialstrom beim Durchfließen des Mischrohres durch Leitelemente immer wieder geteilt, gedreht und wieder zusammengeführt wird, so dass das Injektionsmittel homogenisiert wird. Der Vorteil der Verwendung eines Statikmischers im Vergleich zu einer Injektordüse ist, dass die Qualität des Mischprozesses durch Schwankungen der Viskosität oder der Durchflussgeschwindigkeit nur geringfügig beeinflusst wird, solange beide Komponenten mit der gleichen Förderleistung in das Mischrohr gepresst werden. Bei der Erprobung des erfindungsgemäßen Verfahrens konnte mit statischen Mischern eine sehr gute Mischqualität erzielt werden.

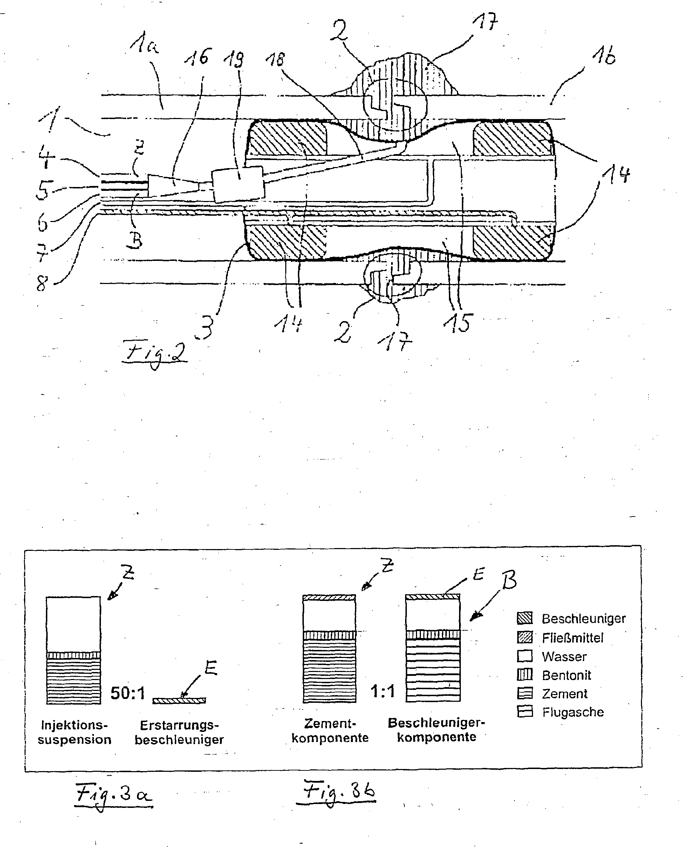

Gemäß einem weiteren Aspekt des erfindungsgemäßen Verfahrens kann der Druck des Injektionsmittels während der Verarbeitung gemessen werden. Diese Druckmessung findet somit nach der Mischung der beiden Komponenten statt und ermöglicht eine situationsgerechte Anpassung der Förderleistung der beiden zu mischenden Komponenten. Wird beispielsweise eine Druckerhöhung festgestellt, und hält diese nach dem Abstellen der Förderpumpen an, weist dies darauf hin, dass die Schadstelle vollständig verfüllt ist. Es ist dabei wichtig, den Druck des fertigen Injektionsmittels direkt in der Saniervorrichtung zu messen, um aussagekräftige Ergebnisse zu erhalten. Bei einer Druckmessung an den Pumpen oder in den Förderschläuchen kann u. U. nicht unterschieden werden, ob der Injektionsvorgang abgeschlossen ist oder nur der Mischer verstopft ist. Weiterhin ist aufgrund der thixotropen Eigenschaften der zugeführten Komponenten eine Aussage über den Druck am anderen Ende der Zuleitung nur bedingt möglich. Eine ebenfalls übliche indirekte Druckmessung über den Luftdruck in der mittleren Kammer des Packers (vgl. hierzu Fig. 2) liefert in der Regel zu ungenaue Ergebnisse.

Gemäß einer weiteren Ausführungsform des erfindungsgemäßen Verfahrens kann die Beschleunigerkomponente vor der Vermischung erwärmt werden, und/oder es kann das Injektionsmittel nach dem Mischen von Beschleunigerkomponente und Zementkomponente erwärmt werden. Durch diese Maßnahmen ergibt sich ein weiterer Erstarrungsbeschleunigender Effekt, da die Wirkung des Erstarrungsbeschleunigers temperaturabhängig ist und allgemein Zement bei höheren Temperaturen besser abbindet. Natürlich darf nicht zu schnell und oder zu hoch erhitzt werden, da sonst Risse o. Ä. im Endmaterial auftreten können, wie dem Fachmann wohlbekannt ist.

Das erfindungsgemäße Verfahren kann auch so ausgeführt werden, dass der Mischer nach durchgeführter Injektion gespült wird. Anderenfalls würde das Injektionsmaterial innerhalb relativ kurzer Zeit im Mischer erstarren und der Mischer dadurch unbrauchbar werden. Zur Spülung kann Wasser verwendet werden, das über eine separate Leitung dem Mischer zugeführt wird. Es kann dabei vorteilhaft sein, zur Spülung die Beschleunigerkomponente einzusetzen. Hierdurch kann eine zusätzliche Wasserzuführung eingespart werden. Die Beschleunigerkomponente alleine erhärtet auch nicht im Mischer und ist zudem als Rückstand in Rohrleitungen oder Kanälen völlig unkritisch.

Das erfindungsgemäße Verfahren wird im Folgenden anhand von Figuren näher erläutert.

Dabei zeigen
- Fig. 1:: Eine Gesamtansicht der Ausführung einer Kanalsanierung.
- Fig. 2:: Eine Detailansicht einer Schadstelle mit einer zur Realisierung des erfindungsgemäßen Verfahrens geeigneten Sanierungsvorrichtung.
- Fig. 3a:: Darstellung des Volumenverhältnisses von Zementkomponente zu einem Erstarrungsbeschleuniger.
- Fig. 3b:: Eine erfindungsgemäße Zusammensetzung von Zementkomponente und Beschleunigerkomponente.
- Figuren 4a und 4b:: Diagramme mit Darstellungen von vier beispielhaften Zusammensetzungen in der Zementkomponente bei unterschiedlichen Bentonitgehalten, wobei das Diagramm gemäß 4a die Feststoffanteile in Gewichtsprozent und das Diagramm gemäß Fig. 4b sämtliche Gewichtsanteile der Zementkomponente darstellt.
- Figuren 5a und 5b:: Die Darstellung der Zusammensetzung der Beschleunigerkomponente entsprechend zu den Figuren 4a und 4 b
- Figuren 6a und 6b:: Darstellung des fertig gemischten Injektionsmaterials entsprechend zu den Diagramme in Figuren 4a bis 5b.

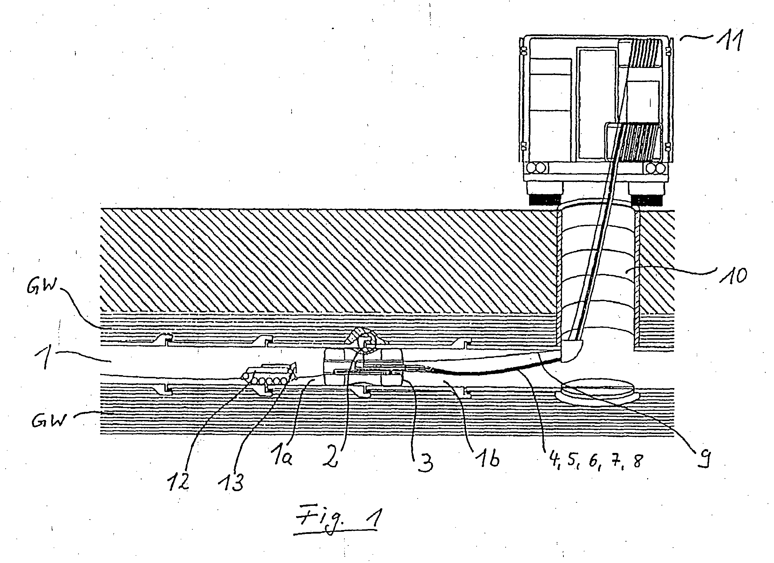

Fig. 1 zeigt eine Gesamtansicht der Ausführung einer Kanalsanierung. Eine Rohrleitung 1 weist hier eine Schadstelle 2 an der Fügestelle zweier Rohrelemente 1 a und 1 b auf, unter der ein Drei-Kammer-Injektionspacker 3 platziert ist. Dieser ist über ein Bündel von Zuleitungsrohren- oder schläuchen 4, 5, 6, 7, 8 sowie ein Zugseil 9 durch einen Zugangsschacht 10, der den Zugang zum Kanalrohr 1 ermöglicht, mit einem Servicefahrzeug 11 verbunden. Weiterhin ist an den Packer 3 gekoppelt ein Injektionsfahrwagen 12, der über eine Kamera 13 verfügt. Die Kamera 13 des Injektionsfahrwagens 12 steht beispielsweise per Funk oder über eine elektrische Leitung mit einer Empfangseinrichtung im Servicefahrzeug 11 in Verbindung, so dass die von der Kamera 13 aufgenommenen Bilder online im Servicefahrzeug 11 ausgewertet werden können und der Packer 3 mit Hilfe des Zugseils 9 am Ort einer entdeckten Schadstelle 2 platzierbar ist. Durch die Zuleitungen 4, 5, 6, 7 und 8 können dem Packer 3 vom Servicefahrzeug 11 aus alle für die Sanierung der Schadstelle erforderlichen Materialien, also etwa Injektionsmittel, Wasser, Druckluft etc. zugeführt werden. Hier können zusätzlich auch Signalleitungen vorhanden sein, mit denen etwa Messwerte von Messeinrichtungen übertragen werden können.

Im vorliegenden Beispiel befindet sich die zu sanierende Rohrleitung 1 in einer Grundwasserschicht GW, die somit einen hydrostatischen Druck auf die Schadstelle 2 ausübt. Dadurch muss das Injektionsmittel 17 (siehe Fig. 2) mit einem gewissen Druck eingebracht werden. Weiterhin ist es dafür erforderlich, dass das Injektionsmittel 17 auch unter Wasser abbinden kann. Dies ist bei der Verwendung eines erfindungsgemäßen Injektionsmittels insbesondere wie in Figur 3b rechts dargestellt gegeben.

Figur 2 zeigt eine Detailansicht der Schadstelle 2 an der Fügestelle zweier Rohrelemente 1 a und 1 b mit dem darunter platzierten Packer 3. Wenn der Packer 3 an der Schadstelle 2 platziert ist, wird zunächst über die Druckluftleitung 8 Druckluft in die Außenkammern 14 des Packers 3 gepresst, so dass diese sich fest an die Wandung des Rohrs 1 anlegen und so die Schadstelle 2 zumindest weitgehend von der Umgebung abdichten. Auch die mittlere Kammer 15 wird durch Zufuhr von Druckluft durch die Druckluftleitung 7 aufgeblasen. Die Zementkomponente Z und die Beschleunigerkomponente B des Injektionsmittels 17 werden nun getrennt durch die jeweiligen Zuleitungen 4 und 6 dem Mischer 16 zugeführt, wo sie zur Bildung des endgültigen Injektionsmittels 17 vermischt werden, das weiter durch die Injektionsmittelleitung 18 in die Schadstelle 2 injiziert wird. Das Injektionsmittel 17 breitet sich dabei im Inneren der Schadstelle 2 und auch um diese herum aus, soweit Hohlräume vorhanden sind und/oder sich das umgebende Material verdrängen lässt. Im Inneren des Rohres 1 ist aufgrund der druckluftgefüllten mittleren Kammer 15 nur eine geringe Ausbreitung des Injektionsmittels 17 möglich, die aber geeignet ist, die Schadstelle 2 gut abzudecken. Im Außenraum um das Rohr 1 herum breitet sich das Injektionsmittel 17 abhängig von der Durchlässigkeit des umgebenden Bodenmaterials mehr oder weniger weit aus. Allerdings ist durch die Reaktion zwischen den beiden Materialkomponenten, also der Zementkomponente Z und der Beschleunigerkomponente B, und dem daraus resultierenden schnellen Ansteifverhalten die Eindringtiefe selbst in extrem durchlässigem Kies reduziert, wobei gleichzeitig eine gleichmäßige Verteilung um die Schadstelle herum erreicht wird. Während des Einbringens des Injektionsmittels 17 in die Schadstelle 2 kann weiterhin mit dem Druckmesser 19 der Druck in der Injektionsmittelleitung 18 gemessen werden, um die Zufuhr der beiden Komponenten durch die Zuleitungen 4 und 6 optimal einstellen zu können. Nach dem Abbinden des Injektionsmittels 17 wird die Druckluft aus den Kammern 14 und 15 abgelassen und der Mischer 16 sowie die Injektionsmittelleitung 18 durch Spülung mit Wasser, das durch die Wasserzuleitung 5 zugeführt wird, gesäubert. Alternativ kann auch mit der Beschleunigerkomponente B gespült werden, womit die Wasserzuleitung eingespart werden kann. Bei der Erprobung des erfindungsgemäßen Verfahrens hat sich die Ausspülung als unproblematisch erwiesen, so dass Rückstände des Injektionsmittels 17 und der zugeführten Materialkomponenten Z und B leicht ausgespült werden konnten. Nach Abschluss dieses Vorgangs kann der Packer 3 mit Hilfe des Zugseils 9 an die nächste Schadstelle umgesetzt werden und dort einen erneuten Sanierungsvorgang vollziehen.

In den Fig. 3a und 3b wird die Zusammensetzung der beiden Komponenten eines erfindungsgemäßeh Injektionsmittels grob dargestellt. Fig. 3a links zeigt eine Zementkomponente Z, die aus Zement, Bentonit und Wasser besteht und im Verhältnis 50:1 zu einem zuzusetzenden Erstarrungsbeschleuniger E steht. Um nun eine Beschleunigerkomponente B zu erhalten, die mit der Zementkomponente Z gut mischbar ist und zum anderen den gewünscht niedrigen Wasseranteil aufweist, wird neben dem Erstarrungsbeschleuniger (E) der Beschleunigerkomponente B Wasser, Bentonit und Flugasche beigegeben. Der Wasseranteil der Zementkomponente Z kann erniedrigt werden, indem der Zementanteil erhöht und gleichzeitig ein Fließmittel beigegeben wird. Im Ergebnis erhält man eine Zementkomponente Z und eine Beschleunigerkomponente B die in einem Volumenverhältnis von 1 : 1 stehen, gut miteinander mischbar sind und einen hinreichend niedrigen Wasseranteil, d. h. einen Wasser/Feststoff-Wert von weniger als 0,5 im fertig gemischten Injektionsmaterial erzeugen. Der Feststoffanteil im fertigen Injektionsmittel ist damit sehr hoch, so dass sich ein schnelles Abbinden und vorteilhafte Materialeigenschaften ergeben.

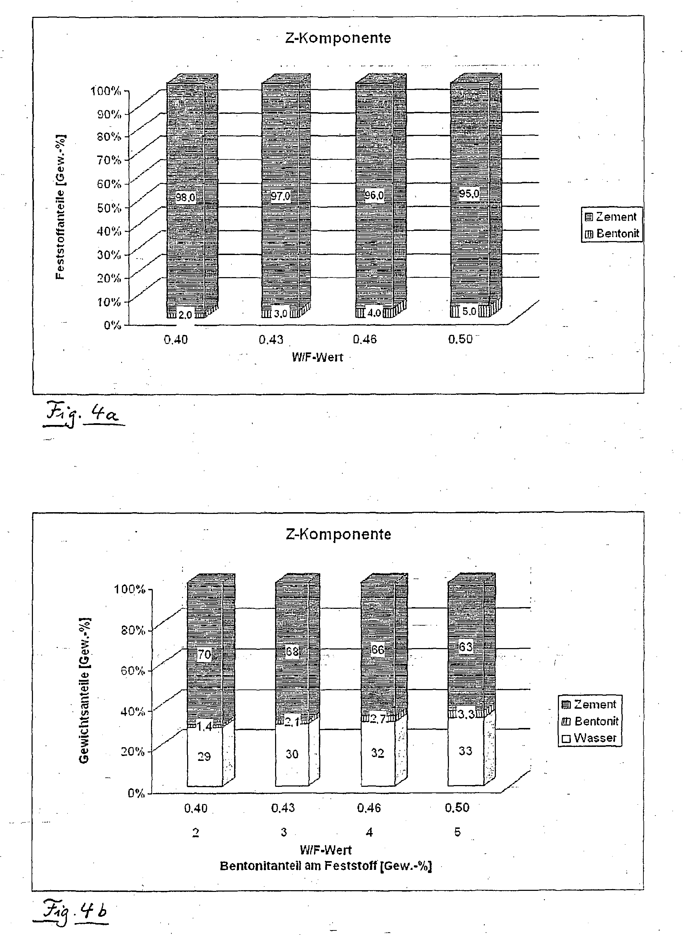

In den Figuren 4a bis 7b sind beispielhafte Zusammensetzungen der Beschleunigerkomponente B, der Zementkomponente Z und des fertigen Injektionsmaterials detaillierter dargestellt.

Fig. 4a zeigt die Feststoffanteile in Gewichtsprozent einer allein aus Zement und Bentonit zusammengesetzten Zementkomponente Z. Die Bentonitanteile variieren von 2% bis 5%. Angegeben sind unter den jeweiligen Säulen die Wasser/Feststoff-Werte (W/F-Werte) des später fertigen Injektionsmaterials. Dieser Wert variiert von 0,4 bis 05.

In Fig. 4b sind dieselben Zementkomponenten Z wie in Fig. 4a dargestellt, jedoch in den Gewichtsanteilen einschließlich des Wassers. Unter den Säulen sind unter den jeweiligen W/F-Werten die Bentonit-Feststoffanteile entsprechend zu Fig. 4a angegeben. Jede der Säulen gemäß Fig. 4b ist also der in Fig. 4a gezeigten Säule mit gleichem Bentonit-Feststoffanteil zuzuordnen.

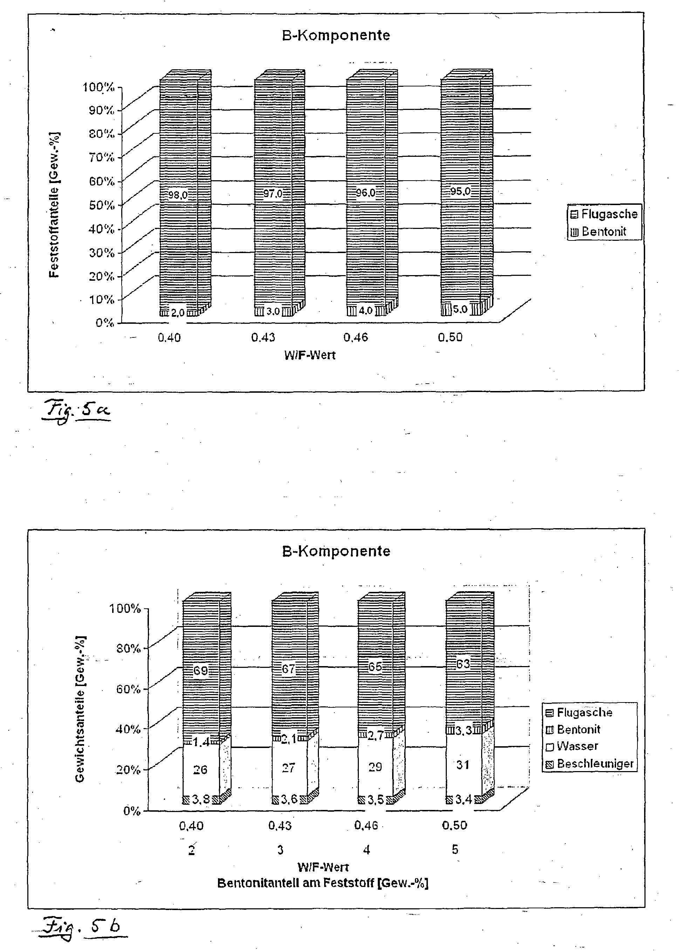

Die Figuren 5a und 5b zeigen eine zu den Figuren 4a und 4b entsprechende Darstellung für die Beschleunigerkomponente B. Fig. 5a zeigt die Feststoffanteile von Flugasche und Bentonit, wobei auch hier der Bentonitanteil von 2 Gew% bis 5 Gew% variiert. Die gesamte Beschleunigerkomponente B enthält neben Flugasche und Bentonit in den vorliegenden Beispielen auch Wasser und den Erstarrungsbeschleuniger. Verschiedene Zusammensetzungen der Beschleunigerkomponente B in Gewichtsprozent einschließlich dieser flüssigen Anteile sind in Fig. 5b wiedergegeben. Beide Diagramme 5a und 5b zeigen unter den jeweiligen Säulen wiederum den Wasser/Feststoff-Wert für das fertig gemischte Injektionsmaterial an. In den Beispielen gemäß Fig. 5b variiert der Beschleunigeranteil z. B. von 3,4 Gew% bis 3,8 Gew% und der Wasseranteil von 26 Gew% bis 32 Gew%.

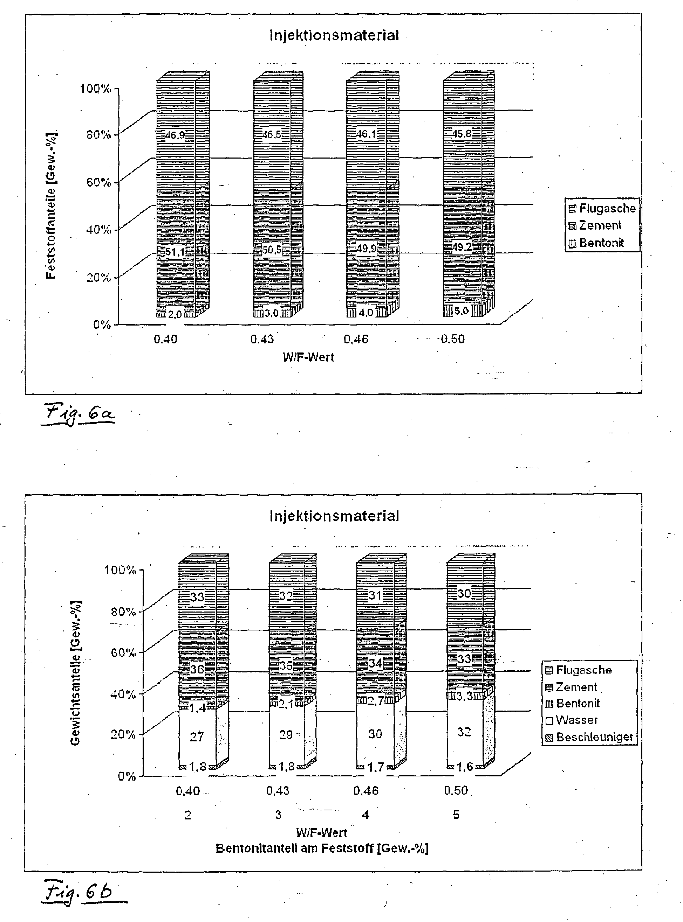

Die Figuren 6a und 6b zeigen nun jeweils in den vier Säulen zum einen die Feststoffanteile (Fig. 6a) bzw. die gesamten Gewichtsanteile (Fig. 6b) des fertig gemischten Injektionsmaterials. D. h. die erste Säule von links gesehen ergibt sich, wenn man die Zementkomponente Z gemäß der ersten Säule von links in den Figuren 4a bzw. 4b mit der Beschleunigerkomponente B gemäß den Figuren 5a, 5b, erste Säule links, mischt. Die weiteren Säulen in Fig. 6a und 6b stellen in gleicher Weise das Mischungsergebnis der Komponenten gemäß den entsprechenden Säulen in den Säulendiagrammen der Figuren 4a bis 5b dar.

Sämtliche dargestellten Mischungsverhältnisse erzielten gute Ergebnisse bei der Anwendung des erfindungsgemäßen Verfahrens.

### Bezugszeichenliste

- 1: Kanalrohr
- 1a, 1b: Rohrelemente
- 2: Schadstelle
- 3: Sanierungsvorrichtung (Injektionspacker)
- 4: Zuleitung für Zementkomponente
- 5: Wasserzuleitung
- 6: Zuleitung für Beschleunigerkomponente
- 7, 8: Druckluftleitungen
- 9: Zugseil
- 10: Zugangsschacht
- 11: Servicefahrzeug
- 12: Injektionsfahrwagen
- 13: Kamera
- 14: Aussenkammern
- 15: mittlere Kammern
- 16: Mischer
- 17: Injektionsmittel
- 18: Injektionsmittelleitung
- 19: Druckmesseinrichtung
- GW: Grundwasserschicht
- B: Beschleunigerkomponente
- E: Erstarrungsbeschleuniger
- Z: Zementkomponente

## Patentansprüche

1. Verfahren zur Sanierung von Schadstellen (2) in Rohrleitungen (1) oder Kanälen, bei dem mittels einer Sanierungsvorrichtung (3) die Schadstelle (2) temporär gegenüber der Umgebung zumindest weitgehend abgedichtet wird und ein Injektionsmittel (17) auf mineralischer Basis, nämlich aufweisend eine Zement und Wasser enthaltende Zementkomponente (Z), in die Schadstelle (2) eingebracht wird,
**dadurch gekennzeichnet, dass**
das Injektionsmittel (17) aus der Zement und Wasser enthaltenden Zementkomponente (Z) und einer einen Zement-Erstarrungsbeschleuniger (E), mindestens einen mineralischen Feststoff und Wasser enthaltenden Beschleunigerkomponente (B) besteht, die getrennt der Sanierungsvorrichtung (3) zugeführt werden und vor dem Einbringen des Injektionsmittels (17) in die Schadstelle (2) vermischt werden, wobei das Volumenverhältnis von Zementkomponente (Z) zu Beschleunigerkomponente (B) höchstens 3:1 und mindestens 2:3 beträgt und beide Injektionsmittelkomponenten mit einem Wasser/Feststoff-Wert von höchstens 0,5 pastös sind.

2. Verfahren nach Anspruch 1, **dadurch gekennzeichnet, dass** der Anteil des Zement-Erstarrungsbeschleunigers (E) in der Beschleunigerkomponente (B) so gewählt wird, dass die im vermischten Injektionsmittel enthaltene Menge an Zement-Erstarrungsbeschleuniger (E) höchstens 6 Gew.-% bezogen auf die Menge des Zements beträgt.

3. Verfahren nach Anspruch 1 oder 2, **dadurch gekennzeichnet, dass** die Zementkomponente (Z) und die Beschleunigerkomponente (B) in einem Volumenverhältnis 1:1 zueinander stehen.

4. Verfahren nach einem der vorhergehenden Ansprüche, **dadurch gekennzeichnet, dass** die Beschleunigerkomponente (B) als mindestens einen mineralischen Feststoff ein puzzolanisches oder latenthydraulisches Material enthält.

5. Verfahren nach einem der vorhergehenden Ansprüche, **dadurch gekennzeichnet, dass** die Beschleunigerkomponente (B) weiterhin Bentonit enthält.

6. Verfahren nach einem der vorhergehenden Ansprüche, **dadurch gekennzeichnet, dass** die Zementkomponente (Z) weiterhin Bentonit enthält.

7. Verfahren nach einem der vorhergehenden Ansprüche, **dadurch gekennzeichnet, dass** die Zementkomponente (Z) weiterhin ein Fließmittel enthält.

8. Verfahren nach einem der vorhergehenden Ansprüche, **dadurch gekennzeichnet, dass** die Zementkomponente (Z) weiterhin ein latent-hydraulisches oder puzzolanisches Material enthält.

9. Verfahren nach einem der vorhergehenden Ansprüche, **dadurch gekennzeichnet, dass** die Zementkomponente (Z) und/oder die Beschleunigerkomponente (B) inerte Zusatzstoffe enthalten.

10. Verfahren nach einem der vorhergehenden Ansprüche, dadurch gekennzeichnt, dass zum Mischen der Zementkomponente (Z) und der Beschleunigerkomponente (B) ein Statikmischer (16) verwendet wird.

11. Verfahren nach einem der vorhergehenden Ansprüche, **dadurch gekennzeichnet, dass** der Druck des Injektionsmittels (17) während der Verarbeitung gemessen wird (18).

12. Verfahren nach einem der vorhergehenden Ansprüche, **dadurch gekennzeichnet, dass** die Beschleunigerkomponente (B) vor der Vermischung erwärmt wird.

13. Verfahren nach einem der vorhergehenden Ansprüche, **dadurch gekennzeichnet, dass** das Injektionsmittel (17) nach dem Mischen von Beschleunigerkomponente (B) und Zementkomponente (Z) erwärmt wird.

14. Verfahren nach einem der vorhergehenden Ansprüche, **dadurch gekennzeichnet, dass** der Mischer nach durchgeführter Injektion gespült wird.

15. Verfahren nach Anspruch 16, **dadurch gekennzeichnet, dass** der Mischer mit der Beschleunigerkomportente gespült wird.

## Claims

1. Method for renovating damage sites (2) in pipelines (1), drains or sewers, in which the damage site (2) is at least largely sealed off temporarily from its surroundings by means of a renovating device (3), and a mineral-based injection composition (17), namely having a cement component (Z) comprising cement and water, is introduced into the damage site (2),
**characterized in that**
the injection composition (17) consists of the cement component (Z) comprising cement and water and of an accelerator component (B) comprising a cement solidification accelerator (E), at least one mineral solid and water, the cement component (Z) and the accelerator component (B) being supplied separately to the renovating device (3) and mixed before the injection composition (17) is introduced into the damage site (2), the volume ratio of cement component (Z) to accelerator component (B) being not more than 3:1 and not less than 2:3, and both components of the injection composition being paste-like, with a value for water/solid of not more than 0.5.

2. Method according to Claim 1, **characterized in that** the fraction of the cement solidification accelerator (E) in the accelerator component (B) is selected such that the amount of cement solidification accelerator (E) present in the mixed injection composition is not more than 6 wt%, based on the amount of the cement.

3. Method according to Claim 1 or 2, **characterized in that** the cement component (Z) and the accelerator component (B) are in a volume ratio of 1:1 to one another.

4. Method according to any of the preceding claims, **characterized in that** the accelerator component (B) comprises, as at least one mineral solid, a pozzolanic or latent-hydraulic material.

5. Method according to any of the preceding claims, **characterized in that** the accelerator component (B) further comprises bentonite.

6. Method according to any of the preceding claims, **characterized in that** the cement component (Z) further comprises bentonite.

7. Method according to any of the preceding claims, **characterized in that** the cement component (Z) further comprises a plasticizer.

8. Method according to any of the preceding clams, **characterized in that** the cement component (Z) further comprises a latent-hydraulic or pozzolanic material.

9. Method according to any of the preceding claims, **characterized in that** the cement component (Z) and/or the accelerator component (B) comprise inert adjuvants.

10. Method according to any of the preceding claims, **characterized in that** the cement component (Z) and the accelerator component (B) are mixed using a static mixer (16).

11. Method according to any of the preceding claims, **characterized in that** the pressure of the injection composition (17) is measured (18) during processing.

12. Method according to any of the preceding clams, **characterized in that** the accelerator component (B) is heated prior to mixing.

13. Method according to any of the preceding claims, **characterized in that** the injection composition (17) is heated after the mixing of accelerator component (B) and cement component (Z).

14. Method according to any of the preceding claims, **characterized in that** the mixer is rinsed after injection has been carried out.

15. Method according to Claim 16, **characterized in that** the mixer is rinsed with the accelerator component.

## Revendications

1. Procédé d'assainissement de zones endommagées (2) dans des conduites (1) ou des canalisations, dans lequel on étanche temporairement, de façon au moins largement étanche, la zone endommagée (2) par rapport à l'environnement au moyen d'un dispositif d'assainissement (3) et on introduit dans la zone endommagée (2) un moyen d'injection (17) à base minérale, notamment présentant un composant de ciment (Z) contenant du ciment et de l'eau, **caractérisé en ce que** le moyen d'injection (17) se compose du composant de ciment (Z) contenant du ciment et de l'eau et d'un composant d'accélérateur (B) contenant un accélérateur de prise du ciment (E), au moins une matière solide minérale et de l'eau, le composant de ciment (Z) et le composant d'accélérateur (B) sont envoyés séparément au dispositif d'assainissement (3) et qui sont mélangés avant l'introduction du moyen d'injection (17) dans la zone endommagée (2), le rapport de volume du composant de ciment (Z) au composant d'accélérateur (B) étant au plus 3:1 et au moins 2:3 et les deux composants du moyen d'injection étant pâteux avec un taux eau/matière solide de 0,5 au maximum.

2. Procédé selon la revendication 1, **caractérisé en ce que** la proportion de l'accélérateur de prise du ciment (E) dans le composant d'accélérateur (B) est choisie de telle manière que la quantité d'accélérateur de prise du ciment (E) contenue dans le moyen d'injection mélange vaille au plus 6 % en poids rapportés à la quantité du ciment.

3. Procédé selon la revendication 1 ou 2, **caractérisé en ce que** le composant de ciment (Z) et le composant d'accélérateur (B) sont présents dans un rapport de volume de 1:1 l'un par rapport à l'autre.

4. Procédé selon l'une quelconque des revendications précédentes, **caractérisé en ce que** le composant d'accélérateur (B) contient, comme au moins une matière solide minérale, un matériau pouzzolanique ou hydraulique-latent.

5. Procédé selon l'une quelconque des revendications précédentes, **caractérisé en ce que** le composant d'accélérateur (B) contient en outre de la bentonite.

6. Procédé selon l'une quelconque des revendications précédentes, **caractérisé en ce que** le composant de ciment (Z) contient en outre de la bentonite.

7. Procédé selon l'une quelconque des revendications précédentes, **caractérisé en ce que** le composant de ciment (Z) contient en outre un moyen fluidifiant.

8. Procédé selon l'une quelconque des revendications précédentes, **caractérisé en ce que** le composant de ciment (Z) contient en outre un matériau hydrauliquelatent ou pouzzolanique.

9. Procédé selon l'une quelconque des revendications précédentes, **caractérisé en ce que** le composant de ciment (Z) et/ou le composant d'accélérateur (B) contiennent des substances d'addition inertes.

10. Procédé selon l'une quelconque des revendications précédentes, **caractérisé en ce que** l'on utilise un mélangeur statique (16) pour mélanger le composant de ciment (Z) et le composant d'accélérateur (B).

11. Procédé selon l'une quelconque des revendications précédentes, **caractérisé en ce que** l'on mesure (18) la pression du moyen d'injection (17) pendant la mise en oeuvre.

12. Procédé selon l'une quelconque des revendications précédentes, **caractérisé en ce que** l'on chauffe le composant d'accélérateur (B) avant mélangé.

13. Procédé selon l'une quelconque des revendications précédentes, **caractérisé en ce que** l'on chauffe le moyen d'injection (17) après le mélange du composant d'accélérateur (B) et du composant de ciment (Z).

14. Procédé selon l'une quelconque des revendications précédentes, **caractérisé en ce que** l'on rince le mélangeur après avoir effectué l'injection.

15. Procédé selon la revendication 16, **caractérisé en ce que** l'on rince le mélangeur avec le composant d'accélérateur.
